# EUROPÄISCHE PATENTSCHRIFT

(11) **EP 0 347 764 B1**
(45) Veröffentlichungstag und Bekanntmachung des Hinweises auf die Patenterteilung: **05.06.1996**
(21) Anmeldenummer: 89110945.6
(22) Anmeldetag: 16.06.1989
(51) Int. Cl.: G01L 3/00

(54) **Einrichtung zum Messen des Drehmomentes einer durch einen Stellantrieb bewegbaren Armatur**
Device for measuring the torque of an armature movable by an actuator
Dispositif pour mesurer le moment de torsion d'une armature mobile par un vérin

(30) Priorität: 21.06.1988 DE 3820838
(43) Veröffentlichungstag der Anmeldung: 27.12.1989
(60) Teilanmeldung: 92118593.0
(73) Patentinhaber: ABB Reaktor GmbH, D-68167 Mannheim (DE)
(72) Erfinder: Stöhr, Hans, D-6800 Mannheim (DE); Mehr, Lothar, D-6840 Lampertheim (DE)
(74) Vertreter: Rupprecht, Klaus, Dipl.-Ing.

(56) Entgegenhaltungen:
- CH-A- 463 145
- DE-A- 2 039 274
- DE-A- 2 340 582
- DE-A- 3 528 364
- ABB Reaktor Prüfbericht GBRA021921 "Drehmomentmessung an Armaturen",ABB Reaktor GmbH

## Beschreibung

Die Erfindung betrifft eine Einrichtung zum Messen des Drehmomentes einer durch einen Stellantrieb bewegbaren Spindel einer Armatur unter Verwendung wenigstens eines Dehnungsmeßstreifens.

Zur Messung von Drehmomenten an Armaturen werden bisher Meßeinrichtungen verwendet, welche die zu übertragende Kraft mit Hilfe von Wägezellen messen, die mit Dehnungsmeßstreifen bestückt sind. Der konstruktive Aufbau und die daraus resultierende Baugröße ist nicht geeignet, diese Meßeinrichtung zwischen Armatur und Stellantrieb bzw. Elektromotor des Stellantriebes permanant zu belassen, so daß diese Meßeinrichtungen nur zu periodischen Messungen einsetzbar sind.

Ferner ist aus der DE-PS 22 50 141 und der DE-AS 12 21 517 eine drehmomentabhängige Abschaltung zum Schutz der Armatur vor Überlast bekannt. Dabei ist die Schneckenwelle des Stellantriebes als Verschiebeschnecke ausgebildet, die über Spannfedern mittig zum Schneckenrad gehalten ist. Tritt an der Antriebswelle ein Lastmoment auf, das größer ist als das durch die Vorspannung der Federn eingestellte Moment, drückt die Umfangskraft am Schneckenrad die Schneckenwelle aus ihrer Mittellage und betätigt über ein Hebelsystem den dazugehörigen Drehmomenttaster, der den Motor elektrisch abschaltet. Eine solche mechanische Steuereinheit ist aufwendig und wegen der Vielzahl mechanischer Übertragungselemente störanfällig.

In der DE-OS 35 28 364 wird ein Reaktionsdrehmomentaufnehmer beschrieben, der vorwiegend zum Anziehen von Schrauben verwendet wird. Er besteht aus zwei über ein Torosionsrohr miteinander verbundenen Flanschen.

Weiterhin ist aus der CH-PS 463 145 eine Anordnung aus koaxialen Nabenelemente bekannt, die eine Umlenkung des Kraftflusses zu einem Kettentrieb ermöglichen. Eine der Naben ist als Meßnabe ausgebildet.

Die Erfindung stellt sich die Aufgabe, eine Einrichtung der eingangs genannten Art anzugeben, die permanent eingebaut ist und während einer Verstellbewegung der Armaturenspindel eine kontinuierliche Drehmomentmessung erlaubt.

Gelöst wird diese Aufgabe erfindungsgemäß dadurch, daß das Gehäuse des Stellantriebes und das Gehäuse der Armatur über eine in ihrem zylindrischen Teil als Torsionsrohr wirkende an sich bekannte Flanschbuchse miteinander zu einer stationären Baueinheit verbunden sind, daß eine durch eine Freidrehung geschwächte Wand des Torsionsrohres den Dehnungsmeßstreifen trägt, daß die Flanschbuchse von der Armaturenspindel durchsetzt ist, und daß in einem Ringraum zwischen der Flanschbuchse und der Armaturenspindel ein Adapter zur Übertragung der Antriebskräfte zwischen dem Stellantrieb und einer die Armaturenspindel in axialer Richtung verstellenden Gewindehülse angeordnet ist, wobei während einer Verstellbewegung der Armaturenspindel die stationär angeordnete Flanschbuchse einen über den Dehnungsmeßstreifen gemessenen, in form eines Torsionsmomentes auftretenden Drehmoment, ausgesetzt ist, das der Reaktionskraft zum Kraftfluß zwischen Stellantrieb (3), Adapter (16) und Gewindehülse (18) entspricht.

Während der Kraftfluß über einen Adapter vom Stellantrieb zu einer die Armaturenspindel verstellenden Gewindebuchse gelangt, wird die zwischen Stellantrieb und Armatur stationär angeordnete Flanschbuchse einem Torsionsmoment ausgesetzt, das über einen Dehnungsmeßstreifen gemessen wird. Durch die kontinuerliche Messung des Drehmomentes können mechanische Veränderungen in der Baueinheit Stellantrieb/Armatur durch den Vergleich von sich ändernden Drehmomentkurven bei gleichen Betriebszuständen frühzeitig erkannt werden. Eine vorbeugende Instandhaltung ist dadurch möglich, bevor der unvorhergesehene Ausfall große Schäden an einer technischen Anlage hervorrufen kann. Die Drehmomentmeßwerte werden unmittelbar zur Ansteuerung des Elektromotors des Stellantriebes verwendet, so daß ein aufwendiger mechanischer Drehmomentbegrenzer nicht erforderlich ist. Die Einrichtung läßt sich ferner zum Steuern von Verfahrensabläufen bei veränderlichen Betriebsparametern einsetzen. So kann beispielsweise bei einer Durchflußregelarmatur ein sich änderndes Drehmoment auf eine Viskositäts- oder Durchflußänderung hinweisen.

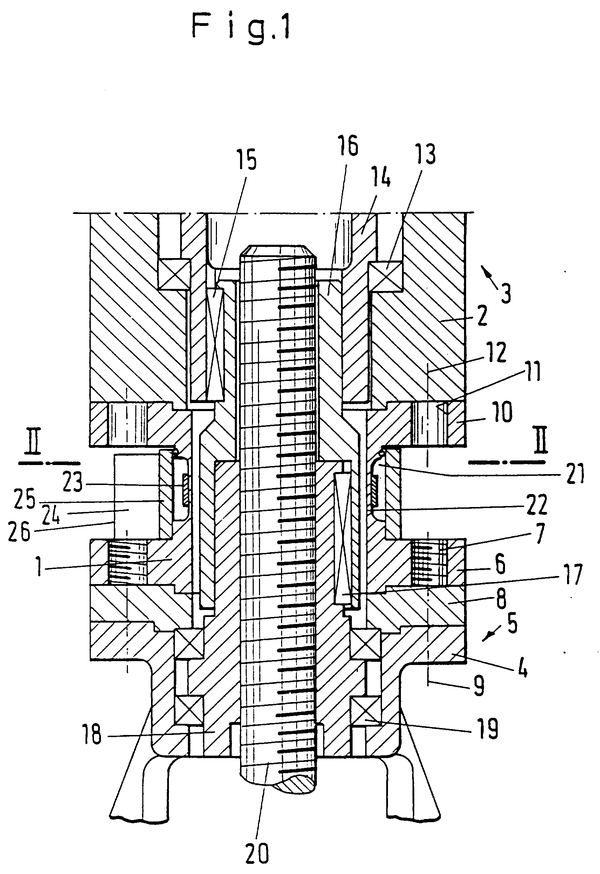

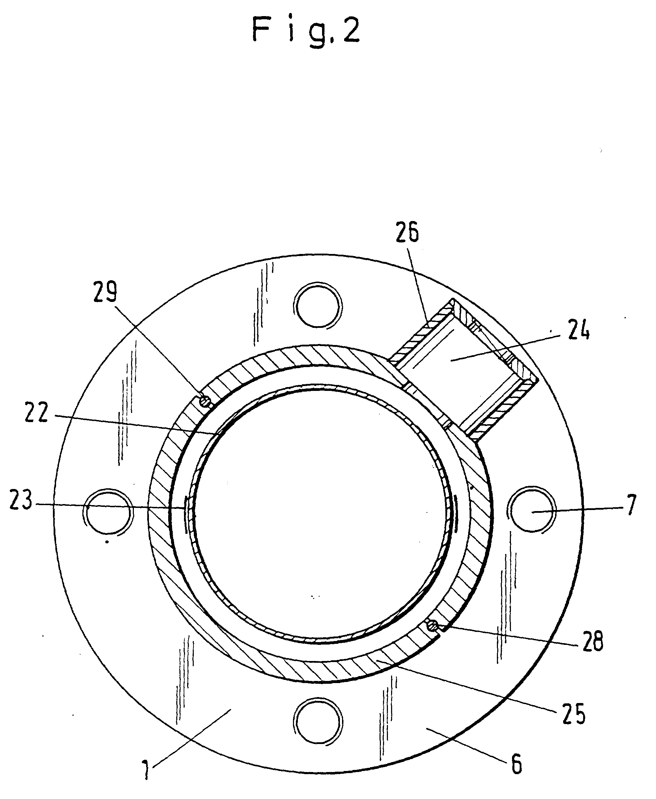

Anhand von einem Ausführungsbeispiel und den Figuren 1 und 2 werden die erfindungsgemäßen Einrichtungen beschrieben.

Dabei zeigt die
- Figur 1: einen Längsschnitt durch einen Teilbereich von Stellantrieb und Armatur mit der dieselben verbindenden Flanschbuchse,
- Figur 2: einen Schnitt entlang der Linie II-II der Figur 1.

Die Figur 1 zeigt eine Flanschbuchse 1, die mit einem Gehäuse 2 eines nicht näher dargestellten Stellantriebes 3 und einem Gehäuse 4 einer ebenfalls nicht weiter dargestellten Armatur 5 zu einer stationären Baueinheit verbunden ist. Dazu ist der untere Flansch 6 mit Gewindebohrungen 7 zur Aufnahme von je einer das Gehäuse 4 und einen ihm zugeordneten Ring 8 durchsetzenden, mit neun, angedeuteten, Schraube versehen. Der obere Flansch 10 weist Druchgangsbohrungen 11 zur Aufnahme von mit 12 angedeuteten Schrauben auf, die in nicht dargestellte Gewindebohrungen des Gehäuses 2 eingreifen.

Zur Übertragung der Antriebskraft des Stellantriebes 3 greift dessen über ein Kugellager 13 am Gehäuse 2 abgestützte Zentralantriebssäule 14 über eine Nut-/Federverbindung 15 in einen hülsenförmigen Adapter 16 ein. Über eine weitere Nut/Federverbindung 17 zwischen dem Adapter 16 und einer Gewindehülse 18 der Armatur 5 wird die durch Kugellager 19 abgestützte Gewindehülse 18 in Drehung versetzt, so daß die Spindel 20 der Armatur 5 ihre Hubbewgung ausführt. Dabei durchsetzt die Spindel 20 den hülsenförmigen Adapter 16.

Die Flanschbuchse 1 ist zwischen ihren Flanschen 6, 10 mit einer Freidrehung 21 versehen, so daß an dieser Stelle eine relativ dünne wand 22 stehenbleibt. Diese dünne Wand 22 trägt zwei diametral gegenüberliegende Dehnungsmeßstreifen 23. Sie messen ein in Form eines Torsionsmomentes auftretendes Drehmoment, das einer den Kraftfluß zwischen Zentralantriebssäule 14, Adapter 16 und Gewindehülse 18 gebildeten Reaktionskraft entspricht. Die meßsignale der Dehnungsmeßstreifen werden einem mit 24 angedeuteten Meßverstärker zugeleitet. Vom Meßverstärker gelangt das Ausgangssignal zu einer nicht dargestellten Auswertestation und/oder zu einer nicht dargestellten Steuereinheit des Stellantriebs-Motor. In der Auswertestation werden die Drehmomentkurven mit Sollkurven bestimmter Betriebsabläufe der Baueinheit Stellantrieb/Armatur verglichen. Abweichungen geben Aufschluß über mechanische Veränderungen in der Baueinheit und erlauben z. B. eine vorbeugende Instandhaltung. Die der Steuereinheit des Elektromotors für den Stellantrieb zufließenden Signale führen zum Abschalten des Motors beim Überschreiten eines zulässigen Drehmomentes. Eine Schutzhülse 25 übergreift die Freidrehung 21 und trägt ein Gehäuse 26 des Meßverstärkers 24. Eine Dichtung 27 schützt die im Bereich der Freidrehung 21 angeordneten Dehnungsmeßstreifen 23 vor Verschmutzung und/oder Beschädigung.

Die Figur 2 zeigt in einem Schnitt entlang der Linie II-II der Figur 1 die Position der Dehnungsmeßstreifen 23 und des Meßverstärkers 24. Die ein Scharnier 28 und ein Verschlußelement 29 aufweisende Schutzhülse 25 umfaßt konzentrisch die Wand 22 und trägt das Gehäuse 26 des Meßverstärkers 24.

## Patentansprüche

1. Einrichtung zum Messen des Drehmomentes einer durch einen Stellantrieb (3) bewegbaren Spindel (20) einer Armatur (5) unter Verwendung wenigstens eines Dehnungsmeßstreifens (23), dadurch gekennnzeichnet, daß das Gehäuse (2) des Stellantriebes (3) und das Gehäuse (4) der Armatur (5) über eine in ihrem zylindrischen Teil als Torsionsrohr wirkende an sich bekannte Flanschbuchse (1) miteinander zu einer stationären Baueinheit verbunden sind, daß eine durch eine Freidrehung (21) geschwächte Wand (22) des Torsionsrohres den Dehnungsmeßstreifen (23) trägt, daß die Flanschbuchse von der Armaturenspindel (20) durchsetzt ist, und daß in einem Ringraum zwischen der Flanschbuchse (1) und der Armaturenspindel (20) ein Adapter (16) zur Übertragung der Antriebskräfte zwischen dem Stellantrieb (3) und einer die Armaturenspindel (20) in axialer Richtung verstellenden Gewindehülse (18) angeordnet ist, wobei während einer Verstellbewegung der Armaturenspindel die stationär angeordnete Flanschbuchse (1) einem über den Dehnungsstreifen gemessenen, in form eines Torsionsmomentes auftretenden Drehmoment, ausgesetzt ist, das der Reaktionskraft zum Kraftfluß zwischen Stellantrieb (3), Adapter (16) und Gewindehülse (18) entspricht.

2. Verwendung einer Einrichtung nach Anspruch 1 zum Steuern von Verfahrensabläufen technischer Anlagen.

## Claims

1. Device for measuring the torque of a spindle (20) of an armature (5), which spindle can be moved by a servo-drive (3), using at least one strain gauge (23), characterized in that the housing (2) of the servo-drive (3) and the housing (4) of the armature (5) are connected to one another, to form a fixed constructional unit, via a flanged bush (1) known per se which acts in its cylindrical part as a torque tube, in that a wall (22), weakened by a recess (21) in the torque tube carries the strain gauge (23), in that the flanged bush is penetrated by the armature spindle (20), and in that an adaptor (16) is arranged in an annulus between the flanged bush (1) and the armature spindle (20) to transmit the drive forces between the servo-drive (3) and a threaded sleeve (18) which adjusts the armature spindle (20) in the axial direction, the flanged bush (1), which is arranged fixed, being subjected during a movement to adjust the armature spindle to a torque, measured via the strain gauge and occurring in the form of a torsional moment, which corresponds to the reactive force to the flux of force between the servo-drive (3), adaptor (16) and threaded sleeve (18).

2. Use of a device according to Claim 1 to control process sequences of technical plant.

## Revendications

1. Dispositif de mesure du couple dans une tige d'actionnement (20) d'une vanne (5), mue par un mécanisme de manoeuvre (3), utilisant au moins une jauge extensométrique (23), caractérisé par le fait que le boitier (2) du mécanisme de manoeuvre (3) et le corps (4) de la vanne (5) sont liés l'un à l'autre dans la direction axiale en un ensemble stationnaire par l'intermédiaire d'une douille à brides (1) connue en soi, dont la partie cylindrique joue le rôle d'un tube de torsion, par le fait qu'une paroi (22) du tube de torsion affaiblie par une gorge (21) porte la jauge extensométrique (23), par le fait que la douille à brides est traversée par la tige d'actionnement (20) de la vanne et par le fait qu'un adaptateur (16) est disposé dans un espace annulaire, entre la douille à brides (1) et la tige d'actionnement (20) de la vanne, aux fins de transmettre les forces d'entraînement entre le mécanisme de manoeuvre (3) et une douille filetée (18) qui assure le déplacement de la tige d'actionnement (20) dans la direction axiale, la douille à brides (1) montée stationnaire étant soumise, lors du déplacement de réglage de la tige d'actionnement, à un couple qui est mesuré par l'intermédiaire de la jauge extensométrique et se manifeste sous la forme d'un couple de torsion correspondant à la force de réaction opposée à la force transmise entre le mécanisme de manoeuvre (3), l'adaptateur (16) et la douille filetée (18).

2. Utilisation d'un dispositif conforme à la revendication 1 pour la commande de processus dans des installations techniques.
